Europäisches Patentamt

European Patent Office

Office européen des brevets

(11) Veröffentlichungsnummer: **0 226 194**
**A2**

(12) **EUROPÄISCHE PATENTANMELDUNG**

(21) Anmeldenummer: **86117337.5**

(22) Anmeldetag: **12.12.86**

(51) Int. Cl.⁴: **F16L 33/00 , F16L 37/24**

(30) Priorität: **16.12.85 CH 5334/85**

(43) Veröffentlichungstag der Anmeldung:
**24.06.87 Patentblatt 87/26**

(84) Benannte Vertragsstaaten:
**DE ES FR GB IT NL**

(71) Anmelder: **Keck, Hermann, Dr.**
**Blauenstrasse 13**
**CH-4106 Therwil/Basel(CH)**

(72) Erfinder: **Keck, Hermann, Dr.**
**Blauenstrasse 13**
**CH-4106 Therwil/Basel(CH)**

(74) Vertreter: **Wilhelms, Rolf E., Dr. et al**
**WILHELMS, KILIAN & PARTNER**
**Patentanwälte Eduard-Schmid-Strasse 2**
**D-8000 München 90(DE)**

(54) **Vorrichtung zur Verbindung von Schläuchen mit Anschluss-Stutzen.**

(57) Mit der erfindungsgemässen Vorrichtung lassen sich Schläuche mit Ansschluss-Stutzen verbinden,die entweder ein Gewinde oder eine Olive oder ein glattes Ende haben.

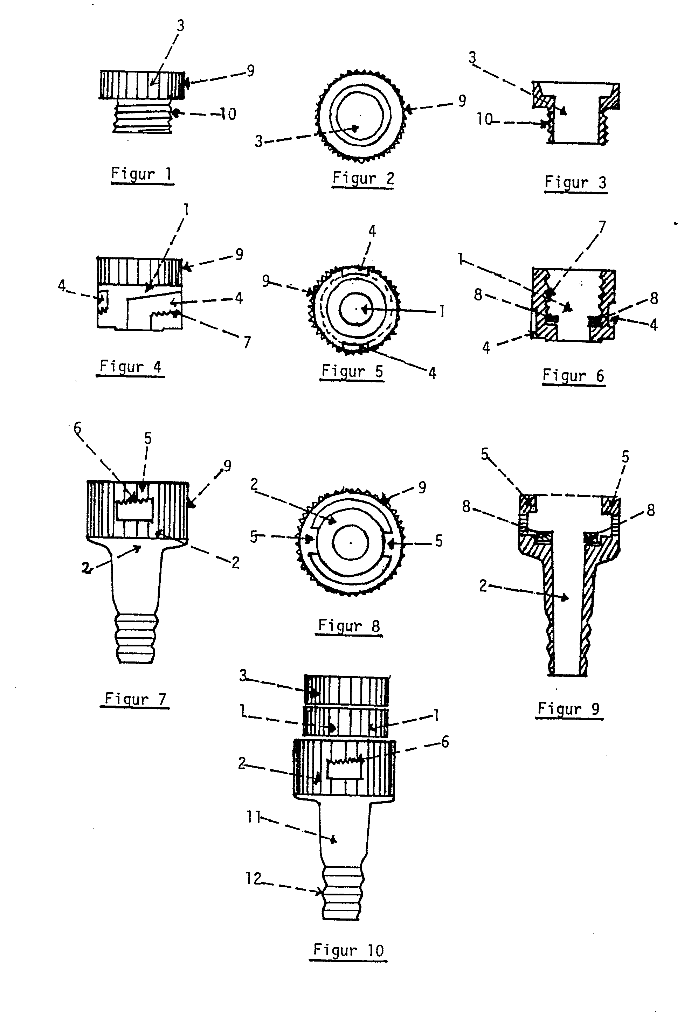

Wie in den Figuren 1-10 dargestellt,besteht diese Vorrichtung aus 3 Teilen,dem . Gewindeteil (1),dem Schlauchteil (2) und dem Klemmring (3). Das Gewindeteil (1) bleibt immer mit dem Anschluss-Stutzen fest verbunden und schützt diesen (vorzugsweise bei Glasteilen) vor Beschädigungen. Das Schlauchteil - (2) bleibt immer mit dem Schlauch verbunden.Beide Teile lassen sich durch eine kurze Drehung mittels Nocken (5) und. Nuten (4) und einrastbaren Rillen (6 und 7) fest verbinden sowie durch eine kurze Linksdrehung leicht wieder lösen.

Mit dem Klemmring (3) werden Oliven oder glatte Enden von Anschluss-Stutzen mittels O-Ring oder Schlauchabschnitt im Gewindeteil(1) festgepresst und abgedichtet. So lässt sich eine Verbindungvon Schläuchen mit Anschluss-Stutzen herstellen und leicht wieder lösen.

## Vorrichtung zur Verbindung von Schläuchen mit Anschluss-Stutzen

Die vorliegende Erfindung betrifft eine Vorrichtung zur Verbindung von Schläuchen mit Anschluss-Stutzen aus Glas, Kunststoff,Metall oder anderen Materialien,die entweder ein Gewinde,eine Olive oder ein glattes Ende aufweisen,bestehend aus dem Gewindeteil (1),dem Schlauchteil (2) und dem Klemmring (3),dadurch gekennzeichnet,dass das Gewindeteil (1) zum Schutz des Anschluss-Stutzens (besonders bei Glas-Anschluss-Stutzen) mit diesem immer fest verbunden bleibt und - schräg ansteigende Nuten (4) aufweist,in welche die Nocken (5) des Schlauchteils (2),das mit dem Schlauch immer fest verbunden bleiben soll,einrasten und so eine enge, dichte Verbindung bilden.Durch eine kurze Umdrehung nach links lassen sich Gewindeteil (1) und Schlauchteil (2) leicht wieder trennen.

Es sind bereits Vorrichtungen bekannt,die Schläuche mit Anschluss-Stutzen verbinden. Früher hat man die Schläuche direkt auf die Oliven oder glatten Enden der Anschluss-Stutzen aufgeschoben.Das war oft mit Schwierigkeiten verbunden.Wenn man nach längerer Zeit den Schlauch wieder abziehen wollte,war dieser meist festgeklebt.Bei diesen Manipulationen sind vorwiegend Glasstutzen des öfteren gesplittert oder abgebrochen.Dadurch kam es zu Verletzungen.Aus Sicherheitsgründen wurden dann einige Anschluss-Stutzen mit Gewinden versehen,auf die man eine Schraubkappe mit Schlauchansatz aufschrauben kann.Will man den Schlauch entfernen,muss man die ganze Schraubkappe mit Schlauchansatz abschrauben.Das Gewinde des Anschluss-Stutzens liegt dann frei.Vorwiegend Glasgewinde werden aber bei der Handhabung oder Lagerung in der Schublade oder im Trockenschrank leicht beschädigt.Wenn dann Sprünge im Glas auftreten oder Teile abbrechen,schliessen diese Gewinde nicht mehr dicht. Die dann notwendige Reparatur von Glasgewinden ist kostspielig und zeitaufwendig.Ausserdem lassen sich diese Gewindekappen mit Schlauchanschlüssen nur bei solchen An Schluss-Stutzen verwenden,die ebenfalls ein Gewinde haben.Für Anschluss-Stutzen mit Oliven oder glatten Enden,die auch heute immer noch sehr häufig verwendet werden,sind diese bekannten Gewindekappen nicht brauchbar.

Der vorliegenden Erfindung liegt die Aufgabe zugrunde,eine Vorrichtung zur Verfügung zu stellen,die die oben genannten Nachteile aus dem Stand der Technik nicht aufweist.Diese Aufgabe wird durch die erfindungsgemässe Vorrichtung durch die kennzeichnenden Merkmale der Patentansprüche gelöst.Die besonderen vorteilhaften Eigenschaften der erfindungsgemässen Vorrichtung bestehen insbesondere darin,dass diese zum Verbinden von Schläuchen mit Anschluss-Stutzen verwendet werden können,die entweder ein Gewinde oder eine Olive oder auch ein glattes Ende besitzen.

Da sich bei der erfindungsgemässen Vorrichtung Schlauchteil (2) und Gewindeteil (1) leicht trennen lassen,kann das Gewindeteil (1) immer mit dem Anschluss-Stutzen fest verbunden bleiben.Glas-Anschluss-Stutzen werden also dadurch,dass das Gewindeteil (1) sie fest umschliesst,vor Beschädigungen geschützt.Sie bleiben also dicht und teure Reparaturkosten werden gespart.

Da auch das Schlauchteil (2) immer fest mit dem Schlauch verbunden bleibt,braucht der Schlauch nur einmal daran befestigt und danach nie wieder gelöst zu werden.Das erleichtert die Verbindung und erhöht die Sicherheit der Handhabung.

Mit dem Gewindeteil(1) lässt sich die erfindungsgemässe Vorrichtung auf alle Anschluss-Stutzen mit Gewinde aufschrauben. Für verschiedene Gewinde sind entsprechende Gewindeteile (1) verfügbar,die jedoch andererseits alle auf dasselbe Schlauchteil passen.Durch Austausch nur der Gewindeteile (1) lässt sich die erfindungsgemässe Vorrichtung für Anschluss-Stutzen mit verschiedenen Gewinden benutzen.

Mit dem Klemmring (3) und einem O-Gummi-Ring oder einem Gummi-Schlauch Abschnitt,vorzugsweise Silikon-Gummi-Schlauch,lassen sich auch Anschluss-Stutzen mit Oliven oder glatten Enden mittels der erfindungsgemässen Vorrichtung mit Schläuchen verbinden.

Im folgenden wird anhand der Zeichnungen der Aufbau und die Wirkungsweise der erfindungsgemässen Vorrichtung erläutert:

Figur 1 zeigt die Seitenansicht des Klemmrings (3)

Figur 2 zeigt den klemmring (3) von oben.

Figur 3 gibt den Querschnitt des Klemmrings (3) wieder.

Figur 4 zeigt das Gewindeteil (1) von der Seite.

Figur 5 zeigt das Gewindeteil (1) von oben.

Figur 6 stellt den Querschnitt des Gewindeteiles (1) dar.

Figur 7 zeigt das Schlauchteil (2) von der Seite.

Figur 8 gibt die Ansicht des Schlauchteiles - (2) von oben wieder.

Figur 9 ist der Querschnitt des Schlauchteiles (2)

Figur 10 ist die Seitenansicht der 3 zusammen gefügten Teile von oben:
Klemmring (3),darunter Gewindeteil (1),darunter Schlauchteil (2)

Um einenSchlauch mit einem Gewinde-Anschluss-Stutzen zu verbinden, schiebt man den Schlauch über die Querrillen (12) der konisch verlaufenden Olive (11) des Schlauchteiles (2),in dem sich eine Flachdichtung (8) befindet.Dann wird das separate Gewindeteil (1) mit der darin befindlichen Flachdichtung (8) auf das Gewinde des Anschluss-Stutzens fest aufgeschraubt.
Anschliessend werden Schlauchteil (2) und Gewindeteil (1) zusammengesteckt,sodass die Nocke (5) des Schlauchteiles (2) mit ihren Rillen (6) in die Rillen (7) der Nute (4) des Gewindeteiles (1) nach kurzer Drehung nach rechts einrasten. Dadurch können sich Gewindeteil (1) und Schlauchteil (2) auch bei Vibrationen nicht selbsttätig lösen.Eine feste und dichte Verbindung von Schläuchen mit Anschluss-Stutzen ist somit durch die erfindungsgemässe Vorrichtung gewährleistet.Durch eine kurze Drehung des Schlauchteiles (2) lässt sich dieses vom Gewindeteil (1),das mit dem Anschluss-Stutzen fest verbunden bleibt,leicht lösen.

Zur Verbindung von Anschluss-Stutzen mit Oliven oder glatten Enden,führt man zuerst den Klemmring (3) in rückwärtiger Position über das Ende des Anschluss-Stutzens.Anschliessend wird über das glatte Ende oder über die Olive des Anschluss-Stutzens ein O-Gummi-Ring oder ein Schlauch-Abschnitt,vorzugsweise aus Silikon-Gummi,geschoben und beides in das Gewindeteil (1) eingedreht bis zum festen Widerstand.Danach schraubt man den Klemmring (3) in das Gewindeteil (1) ein.Der Klemmring (3) presst nun den O-ring oder den Schlauchabschnitt zusammen und drückt ihn gegen die Olive bezw. das glatte Ende.Dadurch wird das Ende des Anschluss-Stutzens im Gewindeteil (1) festgepresst und abgedichtet.Das Schlauchteil (2) wird dann wie oben beschrieben mit dem Gewindeteil (1) verbunden und so eine feste und dichte Verbindung zwischen Schlauch und Anschluss-Stutzen hergestellt,die sich aber auch leicht wieder lösen lässt.

## Ansprüche

1.Vorrichtung zur Verbindung von Schläuchen mit Anschluss-Stutzen aus Glas,Kunststoff,Metall,bestehend aus dem Gewindeteil (1),dem Schlauchteil (2) und dem Klemmring (3),dadurch gekennzeichnet,dass das Gewindeteil (1) zum Schutz der Anschluss-Stutzen (vorwiegend bei Glasanchluss-Stutzen) immer mit diesen fest verbunden bleibt und schräg ansteigende Nuten (4) aufweist,in welche die Nocken (5) des Schlauchteils (2),das mit dem Schlauch immer fest verbunden bleiben soll,einrasten und so eine enge, dichte Verbindung bilden.Durch eine kurze Umdrehung nach links lassen sich Gewindeteil (1) und Schlauchteil(2) leicht wieder trennen.

2.Vorrichtung nach Patentanspruch 1 dadurch gekennzeichnet,dass der Schlauchteil (2) Nocken (5) besitzt,die an ihrer Unterkante Rillen (6) aufweisen,die in die Rillen (7),welche sich an der unteren Seite der Nuten (4) des Gewindeteils (1) befinden,einrasten und so ein selbsttätiges Lösen des Schlauchteiles (2) ,verursacht durch eventuelle Vibrationen,verhindern.

3.Vorrichtung nach Patentanspruch 1 dadurch gekennzeichnet,dass das Gewindeteil (1) ein Innengewinde (7) besitzt,welches sich direkt auf alle Anschluss-Stutzen,die ein passendes Aussengewinde haben,aufschrauben lässt.

4.Vorrichtung nach Patentanspruch 1 dadurch gekennzeichnet,dass der Klemmring (3) am unteren Ende ein Aussengewinde (10) besitzt,welches sich in das Innengewinde (7) des Gewindeteiles (2) einschrauben lässt.

5.Vorrichtung nach Patentanspruch 1 dadurch gekennzeichnet,dass der Klemmring (3) eine glatteInnenwand hat und Anschluss-Stutzen mit Oliven oder glatten Enden mittels eines O-Gummi-Ringes oder eines Schlauchabschnittes,vorwiegend Silikon-Gummischlauch,durch einschrauben in das Gewindeteil (1) festklemmt und abdichtet.

6.Vorrichtung nach Patentanspruch 1 dadurch gekennzeichnet,dass im Gewindeteil (1) und im Schlauchteil (2) Flachdichtungen (8) zur Abdichtung angebracht sind.

7.Vorrichtung nach Patentanspruch 1 dadurch gekennzeichnet,dass Gewindeteil (1),Schlauchteil (2) und Klemmring (3) an der Aussenseite senkrechte Rillen (9) zur besseren Handhabung aufweisen.

8.Vorrichtung nach Patentanspruch 1 dadurch gekennzeichnet,dass der Schlauchteil (2) einen Schlauch-Anschluss-Stutzen (11) besitzt,der sich nach unten konisch zuspitzt und am unteren Ende mehrere Querrillen (12) aufweist,die eine bessere Haftung des Gummi-Schlauches gewährleisten.

Figur 1

Figur 2

Figur 3

Figur 4

Figur 5

Figur 6

Figur 7

Figur 8

Figur 9

Figur 10